# EUROPEAN PATENT SPECIFICATION

(11) **EP 3 089 388 B1**
(45) Date of publication and mention of the grant of the patent: **26.04.2017**
(21) Application number: 15305643.7
(22) Date of filing: 27.04.2015
(51) Int. Cl.: H04J 14/02, H04Q 11/00

(54) **OPTICAL PACKET TRANSMITTING NODE**
OPTISCHER PAKETÜBERTRAGUNGSKNOTEN
N UD DE TRANSMISSION DE PAQUETS OPTIQUES

(43) Date of publication of application: 02.11.2016
(73) Proprietor: ALCATEL LUCENT, 92100 Boulogne-Billancourt (FR)
(72) Inventor: Benzaoui, Nihel Djoher, 91620 Nozay (FR); Pointurier, Yvan, 91620 Nozay (FR)
(74) Representative: Berthier, Karine

(56) References cited:
- EP-A1- 2 458 761
- EP-A1- 2 838 217
- BENZAOUI N ET AL: "Impact of the electronic architecture of optical slot switching nodes on latency in ring networks", IEEE/OSA JOURNAL OF OPTICAL COMMUNICATIONS AND NETWORKING, IEEE, USA, vol. 6, no. 8, 1 August 2014 (2014-08-01), pages 718-729, XP011556519, ISSN: 1943-0620, DOI: 10.1364/JOCN.6.000718 [retrieved on 2014-08-14]
- CHIARONI D: "Optical Packet Add/Drop Multiplexers for packet ring networks", ECOC2008, ECOC, BRUSSELS, 21-25 SEP 2008, ECOC, BRUSSELS EXPO, BELGIUM, 21 September 2008 (2008-09-21), XP001524738, ISBN: 978-1-4244-2228-9
- CHIARONI D ET AL: "Packet OADMs for the next generation of ring networks", BELL LABS TECHNICAL JOURNAL, WILEY, CA, US, vol. 14, no. 4, 4 January 2010 (2010-01-04), pages 265-283, XP001552054, ISSN: 1089-7089, DOI: 10.1002/BLTJ.20415 [retrieved on 2010-02-23]

## Description

### Field of the invention

The invention relates to the technical field of optical communication systems employing a packet granularity.

### Background

Optical packet switching networks employing Wavelength Division Multiplexing (WDM) provide flexibility, high capacity and efficient use of the bandwidth through multiplexing techniques in both time and wavelength. An optical packet add and drop multiplexer (OPADM) for a WDM network makes it possible to perform fundamental functions such as optical packet insertion, optical packet extraction and transparent forwarding of transit traffic on each of a plurality of wavelength channels.

As a conventional Reconfigurable Optical Add Drop Multiplexer, an OPADM typically comprises an optical unit managing the transit traffic in the optical domain, dropping traffic to a drop module and adding traffic from an add module, and an electronic unit that comprises the add and drop modules and interfaces with client devices. An OPADM architecture was described in "Optical Packet Add/Drop Multiplexers for packet ring networks," Proceedings of ECOC 2008, Brussels Expo, Belgium, pp 103-106, XP001524738.

### Summary

Aspects of the disclosure are based on the idea of providing an optical node which configuration for transmitting optical packets is a packet-by-packet trade-off between latency and bandwidth wasting.

In an embodiment, the invention provides an optical node for transmitting data frames in an optical packet switching network, comprising:
a. an input configured for receiving an incoming optical packet, wherein the incoming optical packet comprises a payload assembling a first data frame and a second data frame, wherein the first data frame is intended to be received and the second data frame is intended to be transmitted,
b. an insertion module,
c. a decision module which is configured for determining a value of a decision metric,
d. a disassembling module for disassembling payloads into data frames,
e. an assembling module for assembling data frames into payloads,
f. an output for transmitting optical packets,
   - if the value of the decision metric exceeds a threshold:
      ∘ the disassembling module is configured to disassemble the payload to obtain the first and the second data frames, then
      ∘ the decision module is configured to select a third data frame which is temporarily stored in the insertion module,
      ∘ the assembling module is configured to generate an insertion payload assembling the second data frame and the third data frame, and
      ∘ the output is configured to generate and to transmit an insertion optical packet comprising the insertion payload,
   - if the value of the decision metric does not exceed the threshold:
      ∘ the output is configured to transmit the incoming optical packet.

Thanks to these features, the optical node is configured to select between two forwarding mechanisms on an optical packet-by-optical packet basis in order to transmit incoming optical packets in an efficient manner.

In embodiment, such an optical node can comprise one or more of the features below.

There are different manners to configure the decision module. In a preferred embodiment, the decision module is configured to wait that the insertion module is filled by a third data frame before to select the third data frame in the insertion module.

In an embodiment, the insertion module comprises a means of storage.

There are a lot of decision metrics which may be used without departing from the scope of the invention. In an embodiment, the decision metric is a level of filling ratio of the payload comprised in the incoming optical packet, wherein the filling ratio of the payload is the ratio between the load of the data frames encapsulated into the payload and a total capacity of the payload. In a preferred embodiment, the decision metric is a level of filling of the means of storage.

In an embodiment, the level of filling is related to queued payloads temporarily stored in the means of storage, wherein the queued payloads are assembling data frames, wherein the queued payloads are intended to generate insertion optical packets to be transmitted to the optical packet switching network.

In an embodiment, the level of filling is a function of the number of the queued payloads.

In an embodiment, the threshold is equal to two queued payloads.

In an embodiment, the insertion module further comprises a second means of storage and the third data frame is temporarily stored in the second means of storage, wherein the second means of storage temporarily stores data frames to be assembled into payloads.

In an embodiment, the first and/or second means of storage is a buffer.

In an embodiment, the optical node is further configured to transmit the incoming optical packet transparently when the level of filling does not exceed the threshold.

In an embodiment, the optical node is further configured to transmit the incoming optical packet by optical-electrical-optical conversion of the payload assembling the first data frame and the second data frame when the level of filling does not exceed the threshold.

In embodiment, when the value of the decision metric does not exceed the threshold:
the disassembling module is further configured to disassemble the payload to obtain the first and the second data frames,
the assembling module is further configured to generate an insertion payload assembling the first data frame and the second data frame, and
   ∘ the output is configured to generate and to transmit an insertion optical packet comprising the insertion payload.

In an embodiment, the optical node further comprises a coupler connected to the input for enabling to duplicate the incoming optical packet.

Thanks to these features, the incoming optical packet may be both received by the optical node and transmitted to another destination. Thanks to these features, the first data frame may be both received and transmitted and the second data frame may be both received and transmitted.

In embodiment, when the value of the decision metric exceeds the threshold, the optical node is further configured to duplicate the incoming optical packet.

In an embodiment, the optical node is further configured to transmit the insertion payload assembling the second data frame and the third data frame before to transmit the queued payloads. In another embodiment, the priority rule to insert insertion payloads, including the insertion payload assembling the second data frame and the third data frame and the queued payloads, is a First In First Out (FIFO) rule. In another embodiment, the priority rule is a Last In First Out (LIFO) rule or any other policy.

In an embodiment, the incoming optical packet further comprises a control data, wherein the payload is carried by a first wavelength channel and the control data is carried by a second wavelength channel, wherein the payload and the control data are multiplexed.

The control data may comprise a plurality of different information. In an embodiment, the control data comprises information about the destination of the first data frame and the destination of the second data frame. In an embodiment, for example when the decision metric is a level of filling ratio of the payload, the control data comprises information about the filling ratio of the payload.

In an embodiment, the input comprises an optical receiver configured to demodulate the incoming optical packet into the payload.

In an embodiment, the output comprises an optical transmitter configured to modulate the insertion payload to generate the insertion optical packet.

The invention also provides a method for transmitting data frames in an optical packet switching network comprising:
- receiving an incoming optical packet, wherein the incoming optical packet comprises a payload assembling a first data frame and a second data frame, wherein the first data frame is intended to be received and the second data frame is intended to be transmitted,
- determining a level of filling of a means of storage comprised in an insertion module,
- if the level of filling exceeds a threshold:
   ∘ disassembling the payload to obtain the first and the second data frames, then
   ∘ selecting a third data frame which is temporarily stored in the insertion module,
   ∘ generating an insertion payload assembling the second data frame and the third data frame,
   ∘ generating an insertion optical packet comprising the insertion payload, and
   ∘ transmitting the insertion optical packet comprising payloads,
- if the level of filling does not exceed the threshold:
   ∘ transmitting the incoming optical packet.

### Brief description of the drawings

These and other aspects of the invention will be apparent from and elucidated with reference to the embodiments described hereinafter, by way of example, with reference to the drawings.
Figure 1 is a functional representation of an optical ring network in which embodiments of the invention can be used.
Figure 2 represents a time-slotted WDM packet traffic that can be used in the network of Figure 1.
Figure 3 is a functional representation of packet traffic forwarding between two interconnected optical ring networks, wherein a selection mechanism has selected the option of disassembly and reencapsulation an optical packet.
Figure 4 is a functional representation of packet traffic forwarding between two interconnected optical ring networks, wherein the selection mechanism has selected the option of transmitting the optical packet without disassembly and reencapsulation.
Figure 5 is a graph showing the comparison between the mean queued delay of a first forwarding mechanism comprising electronic forwarding with disassembly and re-encapsulation, a second forwarding mechanism comprising electronic forwarding without disassembly and re-encapsulation, and an optical packet-by-optical packet selection between the first and second forwarding mechanisms, for the data frames to be forwarded, depending on the load.
Figure 6 is a graph showing the comparison between the mean queued delay of a first forwarding mechanism comprising electronic forwarding with disassembly and re-encapsulation, a second forwarding mechanism comprising electronic forwarding without disassembly and re-encapsulation, and an optical packet-by-optical packet selection between the first and second forwarding mechanisms, for the data frames to be inserted, depending on the load.
Figure 7 is a functional representation of an optical node configured to select between the two options.

### Detailed description of the embodiments

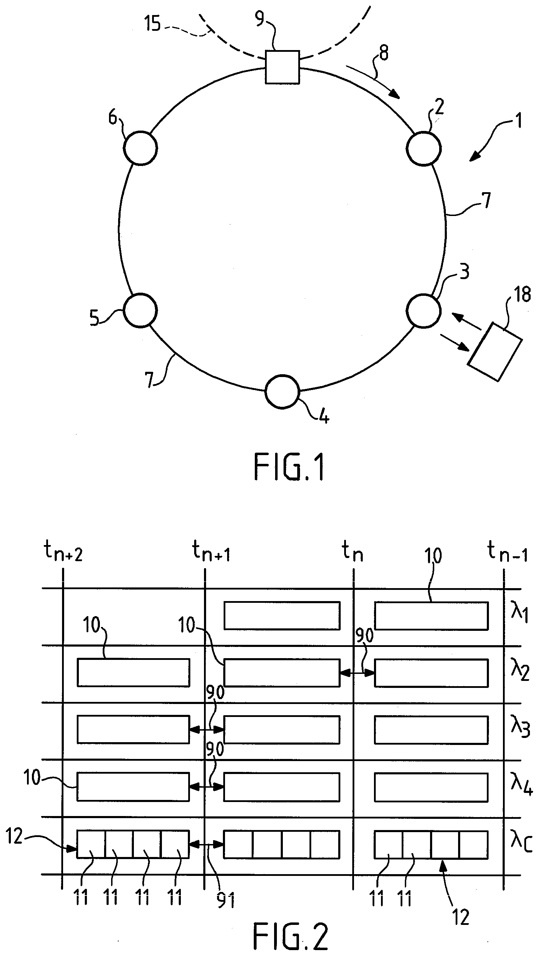

With reference to Figure 1, an optical ring network 1, which can be used in a metropolitan or access segment, comprises optical packet add-drop multiplexers (OPADM) 2, 3, 4, 5, 6 and 9 connected by optical links 7, e.g. optical fibers. Arrow 8 shows a direction of propagation of the optical packets. Alternatively, the ring could be bidirectional.

With reference to Figure 2, the ring network 1 is a time-slotted network where data is transmitted within fixed-duration packets 10 over the optical links 7. Data is transmitted within optical packets 10 carried on N wavelength channels. Although four channels λ1 to λ4, are illustrated for the sake of illustration, the number of channels can be much higher, as in standard frequency grids. The optical packets 10 are WDM-multiplexed over the optical links 7. To each optical packet 10 is associated a header 11 that contains the control data of the packet, including routing information e.g., the destination, and format information e.g., the client protocol being encapsulated. This information may be provided in the form of a numerical code similar to an Ethertype. Packets 10 are transmitted synchronously over all wavelength channels. The packet duration is called a slot. For each slot, the headers 11 for all packets 10 transmitted during that slot are transmitted as a separate optical packet 12 over a separate wavelength channel called control channel λc. Hence, data channels λ1 to λ4 carry optical packets 10 while the control channel λc carries the headers 11 of the packets 10.

On data channels λ1 to λ4, each optical packet 10 is separated from the preceding by an inter-packet guard band 90. On control channel λc, the structure of traffic may be similar to or different from the data channels. Namely, the duration of guard band 91 on the control channel λc may be equal to or different from that of inter-packet guard band 90. Alternatively, the control channel may be implemented as a continuous signal with no guard band at all.

The OPADM nodes 2 to 6 and 9 of Fig.1 can insert or add traffic on any wavelength thanks to one or more tunable lasers, and can receive or drop traffic on specific wavelengths thanks to reconfigurable burst-mode receivers. The OPADM nodes can also let traffic pass transparently through the node, without a conversion to the electrical domain.

The OPADM 9 can interface with another network 15 in a known manner.

In the optical packet switching network 1, a first OPADM node, e.g. node 3, can generate an optical packet 10 comprising a payload encapsulating a plurality of client frames having a same destination or different destinations, e.g. client frame coming from one or more client devices 18. Encapsulating client frames may also be referred to as assembling client frames. For instance, assembling client frames may be performed by concatenating the content of client frames. At the same time the OPADM node 3 generates control data associated to the optical packet. At a destination node, e.g. node 5, the optical packet 10 is received and demodulated to obtain an electrical signal comprising the payload.

When an optical packet 10 is inserted in the optical packet switching network 1, the optical packet is switched by the OPADM nodes in order to reach the destinations of data frames comprised in the optical packet. In the following, forwarding mechanisms used to perform such a switch will be described.

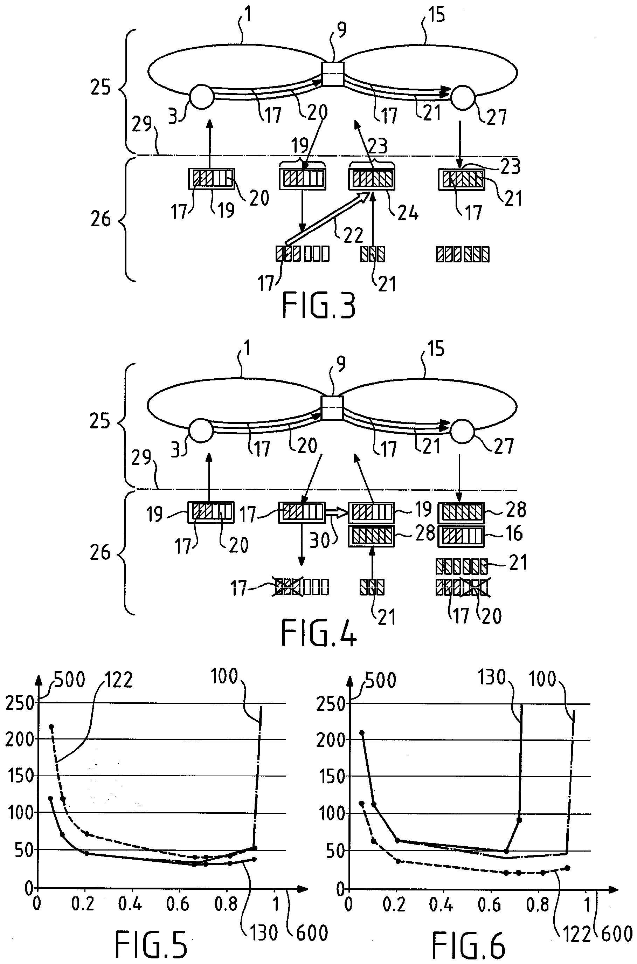

With reference to Figs. 3 and 4, a selection between two different forwarding mechanisms on an optical packet-by-optical packet basis will be described. The forwarding mechanisms allow transmitting a client frame 17 of a payload 19 of an incoming optical packet in an OPADM node 9 interconnecting two optical ring networks 1 and 15 in different manners.

Two client frames 17 and 20 are encapsulated into the payload 19 of the optical packet that is incoming into the OPADM 9. The client frames 17 and 20 are client frames coming from the one or more client devices 18. In term of destinations, the client frame 17 is intended to be transmitted to an OPADM 27 belonging to the optical ring network 15, whereas the client frame 20 is intended to be transmitted to the OPADM 9 interconnecting the two optical ring networks 1 and 15. For the sake of clarity, the client frame 17 will be further referred to as client frame 17 to be forwarded and the client frame 20 as client frame 20 to be dropped. The optical packet was generated in the OPADM 3 and comprises the payload 19.

A buffer located into the OPADM 9 comprises queued client frames to be transmitted to the OPADM 27, namely a client frame 21. For the sake of clarity, the client frame 21 will be further referred to as client frame 21 to be added.

When arriving in the OPADM 9, the optical packet comprising the payload 19 is received and two different forwarding mechanisms can be selected by the OPADM 9 for transmitting the client frame 17 to be forwarded to the OPADM 27.

In Figure 3, the forwarding mechanism 22 selected is with disassembly and re-encapsulation, which corresponds to a disassembling of the payload 19 into the client frame 17 to be forwarded and the client frame 20 to be dropped, then an assembling of a new payload 23 encapsulating the client frame 17 to be forwarded and the client frame 21 to be added for generating a new optical packet 24. Such a forwarding mechanism 22 is also referred to as regrooming. The advantage of this forwarding mechanism 22 is that no offered channel capacity is wasted on the link between the OPADM 9 and the OPADM 27. Indeed, the optical packet comprising the payload 23 which is sent from the OPADM 9 to the OPADM 27 only contains the client frames destined to the OPADM 27. The disadvantage of this forwarding mechanism 22 is that the re-encapsulation processing of the client frames implies a non-negligible additional latency on the client frame 17 to be forwarded transmission, compared with a forwarding mechanism 30 which will be now described with reference to Figure 4.

The forwarding mechanism 30 corresponds to a transmitting of the payload 19 without disassembly and re-encapsulation. The optical packet comprising the payload 19 is received in the OPADM 9 and demodulated into an electrical payload 19 without any electrical processing of the individual client frames. Therefore, the only latency added in the OPADM 9 is the latency corresponding to the Optical-Electrical-Optical conversion of the payload 19. Indeed, the payload 19 is queued before being inserted for forwarding. Depending on the network load the payload 19 may wait few time slots before being inserted. Therefore, the priority is given to the payload to be forwarded in order to keep the latency low. The client frame 21 to be added is encapsulated into another payload 28 and transmitted in another optical packet. Since the client frame 20 to be dropped is not destined to OPADM 27, the client frame 20 to be dropped is discarded in the OPADM 27. Therefore, the channel capacity used to transmit the load of the client frame 20 to be dropped on the link between the OPADM 9 and the OPADM 27 is wasted.

Selecting between the forwarding mechanism 30 and the forwarding mechanism 22 will now be described on the basis of a trade-off between latency and wasted capacity.

In the two different forwarding mechanisms represented in the embodiment of the Figures 3 and 4, the optical packets are transmitted untransparently i.e. with Optical-Electrical-Optical conversion. The separation between the optical layer 25 and the electrical layer 26 is schematically represented by dotted line 29. The forwarding mechanism 30 however comprises less electrical processing than the forwarding mechanism 22. Optical-Electrical-Optical conversion increases the energy consumption but allows changing the wavelength channel carrying the incoming optical packet for the link between the OPADM 9 to the OPADM 27 with reference to the link between the OPADM 3 and the OPADM 9.

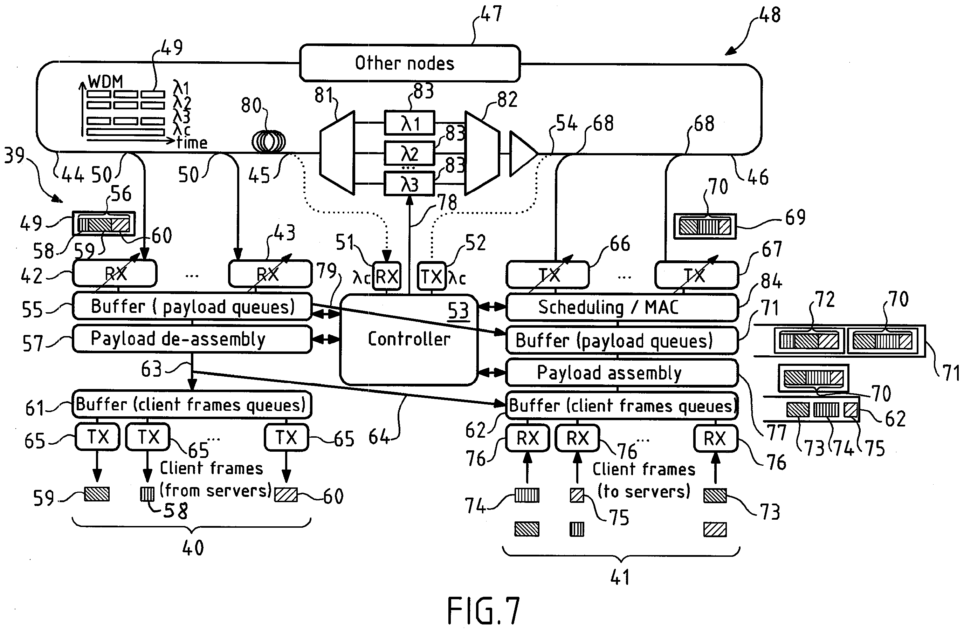

Now, with reference to Figure 7, an OPADM 39 adapted to implement such forwarding mechanisms according to an embodiment will now be described. The OPADM 39 is an intermediate OPADM configured to implement the forwarding mechanisms between a source OPADM and a destination OPADM in a single ring optical network. The OPADM 39 is connected to an input fiber 44 and to an output fiber 46 which connect other nodes 47 in an optical ring network 48. As described previously with reference to Figure 2, the optical ring is a time-slotted WDM optical ring, wherein optical packets, e.g. the optical packet 49, are carried by a wavelength channel, e.g. λ₁, which is multiplexed with other wavelength channels λ₂, λ₃ carrying other time-slotted optical packets into the input fiber 44.

The OPADM comprises a drop module 40 which comprises optical receivers 42, 43 which are wavelength tunable. The optical receivers 42, 43 are connected to the input fiber 44 through optical splitters 50 in order to receive incoming optical packets, e.g. optical packet 49 and to demodulate the optical packets into electrical payloads, e.g. the payload 56. The incoming electrical payloads are temporarily stored in a payload buffer 55.

As a function of a control of a controller 53, the payloads may be disassembled into client frames by a payload de-assembly module 57 or transmitted to another payload buffer 71 belonging to an add module 41 for re-insertion.

When a payload, e.g. the payload 56, is disassembled into client frames, e.g. client frames 58, 59 and 60, by the payload de-assembly module 57, the client frames may be routed either to a frame buffer 61 or respectively to a frame buffer 62, as shown by arrows 63, respectively 64. The frame buffer direction, namely between frame buffer 61 or frame buffer 62, is a function of the destination of the client frame. The frame buffer 61 temporarily stores the client frames which are dropped client frames, namely destined to client devices connected to the OPADM 39. The frame buffer 61 therefore transmits the data frames to the right client servers through a corresponding transponder 65.

The OPADM also comprises the add module 41 which comprises the frame buffer 62. The add module 41 also comprises optical transmitters 66, 67 which are wavelength tunable in order to transmit insertion payloads to the other nodes 47 through the fiber 46 by generating optical packets, e.g. optical packet 69, comprising the insertion payloads, e.g. the payload 70. The optical transmitters 66, 67 are connected to the fiber 46 by optical couplers 68.

The insertion payloads which are inserted to the optical traffic in the ring network 48, e.g. the payload 70, are encapsulating client frames from different sources, namely from the payload de-assembly module 57 as shown by arrow 64, or from client servers via transponders 76. The client frames which are arriving from the payload de-assembly module 57, which are referred to as client frames to be forwarded, are temporarily stored in the frame buffer 62. The client frames which are arriving from the client servers via the transponders 76, which are referred to as client frames to be added, are also temporarily stored in the frame buffer 62, e.g. placed in queues in the frame buffer 62, with the client frames to be forwarded. Such client frames to be added arriving from different client servers are represented on the Figure 7: client frames 74, 75 and 73.

Queued client frames are selected and transmitted from the frame buffer 62 to a payload assembly module 77 wherein the Client frames are encapsulated into insertion payloads, e.g. payload 70. The insertion payloads are then transmitted to a payload buffer 71 for queued. Figure 7 schematically represents a queue of two insertion payloads 70 and 72 waiting in the payload buffer 71 for insertion into the optical network. As previously described, the insertion payloads queued in the payload buffer 71 may originate either from the payload buffer 55 of the drop module 40, as shown by arrow 79 or from the payload assembly module 77 of the add module 41. The payloads originating from the payload buffer 55 of the drop module 40 are transmitted to the payload buffer 71 under the control of the controller 53. The controller 53 receives instructions from the control channel. The control channel is processed as follows: the control channel λ_{c} is first extracted from the input fiber 44 using an optical splitter 45 and transmitted to a dedicated receiver 51. After reception, the demodulated control data is processed by the controller 53, which serves also to generate the outgoing control packets on the control channel λ_{c} using a dedicated transponder 52. The dedicated receiver 51 and the dedicated transponder 52 are configured to respectively receive and transmit the control channel λ_{c} at the wavelength of the control channel. The outgoing control channel is injected through a coupler 54 into the output fiber 46 where it is multiplexed with outgoing payloads. The control channel is opaque, namely it is submitted to optical-to- electrical and electrical-to-optical conversions at each node.

By contrast, when an incoming optical packet does not comprise any client frame destined to the OPADM 39, the incoming optical packet can be transmitted transparently.

The OPADM 39 also comprises a transit section connecting the input fiber 44 to the output fiber 46. The transit section comprises an optical demultiplexer 81 and an optical multiplexer 82, between which each wavelength channel λ₁, λ₂ and λ₃ is spatially separated and transmitted through a dedicated optical gate 83.

The OPADM 39 may also include some optical buffer mechanisms, e.g. delay lines, at different locations in the optical transit path, e.g. fiber delay line 80, to generate sufficient delay for the control data to be processed while optical packets are transiting. For example, fiber delay lines may be provided for that purpose on each optical line. The OPADM 39 also comprises a scheduling module 84 in the add module 41 in order to insert optical packets comprising insertion payloads from the payload buffer 71 at each time slot.

The controller 53 handles synchronization between optical packets across wavelength channels, insuring that no added optical packet is inserted at a time and wavelength that conflicts with a transiting optical packet; and that all time slots cleared out by the optical gates 83 are indeed filled up by an added packet. The node controller 53 serves to control other components of the node, such as the optical gates 83 as shown by arrow 78, the payload buffers 55 and 71, the payload de-assembly module 57, and payload assembly module 77 and the frame buffers 61 and 62 at every time slot as a function of the destination obtained from the headers 11 associated to the optical packets 10 being demodulated by the optical packet receivers 42, 43.

The add module 41 is controlled by the controller 53. When received client frames have to be forwarded to a further destination in the optical network, the controller 53 can select between the two forwarding mechanisms 22 and 30 which will be further described with reference to Figures 5 and 6.

With reference to Figure 5 and 6, the advantage of a selection between the two mechanisms 22 and 30 will now be described for the forwarding of client frames to be forwarded. In the described example, the client frame to be forwarded 17 is forwarded from the OPADM 3 to the OPADM 27 through the OPADM 9 as previously described with reference to Figures 3 and 4. The structure of the OPADM 9 is similar to the structure described for the OPADM 39 with reference to Figure 7.

The dropped client frame 20 is transmitted from the OPADM 3 to the OPADM 9 as previously described with reference to Figures 3 and 4.

The added client frame 21 is transmitted from the OPADM 3 to the OPADM 9 as previously described with reference to Figures 3 and 4.

The following assumptions are made for evaluating the effect of the choice of the forwarding mechanism 22, represented by curve 122, the forwarding mechanism 30, represented by curve 130, or of a packet-by-packet selection between the forwarding mechanisms 22 and 30, represented by curve 100:

The dropped client frame 20, the added client frame 21 and the client frame to be forwarded 17 all have a same packet arrival rate (normalized per channel capacity) a and are all transmitted on the same wavelength channel, e.g. λ₁, which is the only wavelength channel shared by the three OPADMs 3, 9 and 27.

For example, the capacity of the wavelength channel λ₁ on the link between the OPADM 9 and the OPADM 27 is equal to 2*a. In such a case, the load of the optical packet comprising the payload which encapsulates the client frame 17 to be forwarded and the added client frame 21 is equal to the capacity of the wavelength channel λ₁ on the link between the OPADM 9 and the OPADM 27. In such a case, the wavelength channel λ₁ on the link between the OPADM 9 and the OPADM 27 is said to be saturated. In the following, the load of optical packets will be normalized to this saturation level. The slot duration is D=8 µs, the capacity of the wavelength channel λ₁ is equal to 2*a=1 and the channel rate is 10 Gb/s.

The vertical axis 500 represents the latency contribution resulting from a considered client frame. The latency represents the mean queued delay, in µs, of the considered client frame and being temporarily stored into the payload buffer 71 of the add module 41 of the OPADM 9. The mean queued delay also comprises the insertion delay on the link between the OPADM 9 and the OPADM 27.

The horizontal axis 600 represents the load of the considered client frame.

The latency contribution is a function of the load of the considered client frame.

In Figure 5, the considered client frame is the client frame 17 to be forwarded whereas in Figure 6 the considered client frame is the added client frame 21.

For each Figure, the latency is represented as a function of the load by a curve. The curve is different with respect to the scenario selected between:
- The forwarding mechanism 22, i.e. with disassembly and re-encapsulation, represented by dashed curves 122,
- The mechanism 30, i.e. forwarding without disassembly and re-encapsulation, represented by solid curves 130,
- or a packet-by-packet selection between the forwarding mechanisms 22 and 30, represented by curve 100.

As explained before, the forwarding mechanism 30, i.e. forwarding without regrooming, keeps the latency low for the client frame 17 to be forwarded but causes offered channel capacity waste; which is visible on the added client frame 21 that can reach only 70% of the load (instead of 100%).

By contrast, using the forwarding mechanism 22, i.e. with regrooming, all the offered channel capacity is used (both forwarded and added client frames 17 and 21 reach 100% of the capacity) but at the expense of the latency experienced by the client frame 17 to be forwarded which gets higher than with the mechanism 30.

As observed on Figures 5 and 6, the disadvantage of each forwarding mechanism is only present for a certain load regime.

For low-loads, the forwarding mechanism 30, i.e. forwarding without regrooming, is suitable, since even if a part of the bandwidth is wasted it does not matter since there is no need for this resource. For the very-low loads (below 0.2), the increase observed for the latency is due to the increase of time needed to fill entirely a payload with client frames 73, 74 and 75 in the frame buffer 62 when the loads are very low. In other embodiments, the payloads may be assembled even not entirely filled and triggered to be transmitted to the payload buffer 71 periodically; therefore decreasing the latency observed for very low loads.

For high loads, forwarding mechanism 22, i.e. with regrooming, is suitable since the bandwidth is a precious resource and should be saved even if it is to the detriment of added latency to the forwarded traffic.

Now the packet-by-packet selection between the forwarding mechanisms 22 and 30 implemented by the controller 53 will be described. The selection between the forwarding mechanisms 22 and 30 is load-dependent in order to perform a re-encapsulation electrical processing only when there is channel congestion, hence benefitting from the offered channel capacity to reduce the latency without overloading the channel when it is already loaded.

The forwarding mechanism selection is made locally according to the level of filling of a buffer in the add module 41, e.g. the payload buffer 71 or to the level of filling of the frame buffer 62.

For example, the OPADM 27 is listening on a set of wavelengths λ={ λ₁,..., λₖ}. The congestion between the OPADM 9 and the OPADM 27 can be measured through the number Qs of queued payloads 70, 72 which are waiting to be inserted on any wavelength within set λ into the payload buffer 71 of the OPADM 9. As described above, the queued payloads 70, 72 are insertion payloads which are encapsulating client frames, also referred to as data frames.

When an optical packet arrives at the OPADM 9, the controller 53 performs a selection between the forwarding mechanism 30 and the forwarding mechanism 22 in order to forward the payload comprised in the optical packet with or without re-encapsulation. The decision is taken independently for each optical packet.

For example, the controller 53 selects the forwarding mechanism 30 when Qs is below a threshold Th and the controller 53 selects the re-encapsulation mechanism 22 when the number Qs is above a threshold Th. For example, the threshold is equal to two queued payloads, or to three queued payloads.

Alternatively, the selection between the mechanisms 22 and 30 can be driven by a centralized control plane, in which case a centralized control plane periodically gives instructions to each OPADM regarding the re-encapsulation policy, based on the congestion indicators (in this example, the number Qs) as reported by each OPADM.

In an embodiment, the transiting optical packets which do not comprise data frames destined to the OPADM 9 are forwarded transparently thanks to a control of the optical gates 83 by the controller 53 as a function of the associated control data.

In another embodiment, the forwarding mechanism 30 may also be performed transparently.

In an embodiment, the selection between the forwarding mechanism 30 and the forwarding mechanism 22 is performed in an optical node in a backhaul scenario.

In an embodiment, the OPADM 39 is adapted to implement the selection of the adapted forwarding mechanism in a two rings optical packet network as the OPADM 9 of the Figures 3 and 4. In such an embodiment, the control data λc may have a different wavelength for each of the two rings 1 and 15. In such an embodiment, the OPADM 39 performs Optical-Electrical-Optical conversion of every incoming optical packet, even if no data frame is destined to the OPADM 39.

In embodiments, the receivers 42, 43 are fixed-wavelength receivers and the transmitters 66, 67 are fast tunabled-wavelength transmitters.

In embodiments, the receivers 42, 43 are fast-tunabled-wavelength receivers and the transmitters 66, 67 are fixed-wavelength transmitters.

In embodiments, both the receivers 42, 43 and the transmitters 66, 67 are fast-tunabled in wavelength.

In embodiments, the receivers and/or the transmitters are reconfigurable in wavelength.

In embodiments, the optical gates 83 may be implemented in various manners. In an embodiment, the optical gates 83 are implemented as slot blockers for blocking any wavelength in a slot duration. In an embodiment, the optical gates 83 are wavelength blockers and are configured to statically block one or several wavelengths.

In embodiments, the controller 53 may also comprise some class of service management. In such an embodiment, for example, payloads to be forwarded and payloads to be inserted are temporarily stored in separate payloads queues such that payloads to be forwarded can be served first.

In such an embodiment, for example data frames to be forwarded and data frames to be inserted are temporarily stored in separate frame queues such that payloads to be forwarded can be served first.

In embodiments, the frame formats may be in accordance with a variety of standard protocols, e.g. all versions of the Internet Protocol, Frame Relay, Ethernet, SONET/SDH, OTN and others.

Elements such as the controller 53 could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical node (9, 39) for transmitting data frames in an optical packet switching network (1, 48), comprising:
a. an input (44) configured for receiving an incoming optical packet (10, 49), wherein the incoming optical packet comprises a payload (56, 19) assembling a first data frame (20) and a second data frame (17), wherein the first data frame (20) is intended to be received and the second data frame (17) is intended to be transmitted,
b. an insertion module (41),
c. a decision module (53) which is configured for determining a value of a decision metric,
d. a disassembling module (57) for disassembling payloads into data frames,
e. an assembling module (77) for assembling data frames into payloads,
f. an output (46) for transmitting optical packets (69),
• if the value of the decision metric exceeds a threshold:
∘ the disassembling module (57) is configured to disassemble the payload to obtain the first (20) and the second (17) data frames, then
∘ the decision module (53) is configured to select a third data frame (21) which is temporarily stored in the insertion module (41),
∘ the assembling module is configured to generate an insertion payload (23) assembling the second data frame (17) and the third data frame (21), and
∘ the output (46) is configured to generate and to transmit an insertion optical packet (69) comprising the insertion payload,
• if the value of the decision metric does not exceed the threshold:
∘ the output (46) is configured to transmit the incoming optical packet.

2. The optical node according to claim 1, wherein the insertion module comprises a means of storage.

3. The optical node (9, 39) according to claim 2, wherein the decision metric is a level of filling of the means of storage.

4. The optical node (9, 39) according to claim 3, wherein the level of filling is related to queued payloads (70, 72) temporarily stored in the means of storage (71), wherein the queued payloads are assembling data frames (73, 74, 75, 21), wherein the queued payloads are intended to generate insertion optical packets (69) to be transmitted to the optical packet switching network (1, 48).

5. The optical node according to claim 4, wherein the level of filling is a function of the number of the queued payloads (70, 72).

6. The optical node according to claim 5, wherein the threshold is equal to two queued payloads.

7. The optical node according to claim 5, wherein the optical node is further configured to transmit the insertion payload (70) assembling the second data frame (17) and the third data frame (21) before transmitting the queued payloads.

8. The optical node according to any one of claim 2 to 7, wherein the insertion module (41) further comprises a second means of storage (62) and the third data frame (21) is temporarily stored in the second means of storage (62), wherein the second means of storage temporarily stores data frames to be assembled into payloads.

9. The optical node according to any one of claim 2 to 8, wherein the first (71) and/or second (62) means of storage is a buffer.

10. The optical node according to claim 1, wherein the decision metric is a level of filling ratio of the payload comprised in the incoming optical packet, wherein the filling ratio of the payload is the ratio between the load of the data frames encapsulated into the payload and a total capacity of the payload.

11. The optical node according to any one of claim 1 to 10, wherein the optical node (39) is further configured to transmit the incoming optical packet transparently when the decision metric does not exceed the threshold.

12. The optical node according to any one of claim 1 to 11, wherein the optical node is further configured to transmit the incoming optical packet (49) by optical-electrical-optical conversion of the payload (56) assembling the first data frame and the second data frame when the decision metric does not exceed the threshold.

13. The optical node according to any one of claim 1 to 12, wherein the incoming optical packet (49) further comprises a control data (λc), wherein the payload (59) is carried by a first wavelength channel (λ1) and the control data is carried by a second wavelength channel, wherein the payload and the control data are multiplexed, wherein the control data comprises information about the destination of the first data frame (58) and the destination of the second data frame (59).

14. The optical node according to any one of claim 1 to 13, wherein the input (44) comprises an optical receiver (42) configured to demodulate the incoming optical packet into the payload and the output (46) comprises an optical transmitter (66) configured to modulate the insertion payload to generate the insertion optical packet.

15. A method for transmitting data frames in an optical packet switching network comprising:
• receiving an incoming optical packet, wherein the incoming optical packet comprises a payload assembling a first data frame and a second data frame, wherein the first data frame is intended to be received and the second data frame is intended to be transmitted,
• determining a level of filling of a means of storage comprised in an insertion module,
• if the level of filling exceeds a threshold:
∘ disassembling the payload to obtain the first and the second data frames, then
∘ selecting a third data frame which is temporarily stored in the insertion module,
∘ generating an insertion payload assembling the second data frame and the third data frame,
∘ generating an insertion optical packet comprising the insertion payload, and
∘ transmitting the insertion optical packet comprising payloads,
• if the level of filling does not exceed the threshold:
∘ transmitting the incoming optical packet.

## Patentansprüche

1. Optischer Knoten (9, 39) zum Übermitteln von Datenrahmen in einem optischen Paketvermittlungsnetzwerk (1, 48), umfassend:
a. einen Eingang (44), der konfiguriert ist für den Empfang eines eingehenden optischen Pakets (10, 49), wobei das eingehende optische Paket Nutzdaten (56, 19) umfasst, die einen ersten Datenrahmen (20) und einen zweiten Datenrahmen (17) assemblieren, wobei der erste Datenrahmen (20) zum Empfangen und der zweite Datenrahmen (17) zum Übermitteln bestimmt ist,
b. ein Einfügemodul (41),
c. ein Entscheidungsmodul (53), welches konfiguriert ist für das Bestimmen eines Werts einer Entscheidungsmetrik,
d. ein Disassemblierungsmodul (57) zum Disasserriblieren von Nutzdaten in Datenrahmen,
e. ein Assemblierungsmodul (77) zum Assemblieren von Datenrahmen in Nutzdaten,
f. einen Ausgang (46) zum Übermitteln optischer Datenpakete (69),
• wenn der Wert der Entscheidungsmetrik einen Grenzwert überschreitet:
∘ ist das Disassemblierungsmodul (57) dafür konfiguriert, die Nutzdaten zu disassemblieren, um erste (20) und zweite Datenrahmen (17) zu erhalten, daraufhin
∘ ist das Entscheidungsmodul (53) dafür konfiguriert, um einen dritten Datenrahmen (21) auszuwählen, der vorübergehend in dem Einfügemodul (41) gespeichert wird,
∘ das Assemblierungsmodul ist dafür konfiguriert, um durch das Assemblieren des zweiten Datenrahmens (17) und des dritten Datenrahmens (21) eine Einfügungsdatennutzlast (23) zu generieren, und
∘ der Ausgang (46) ist dafür konfiguriert, um ein optisches Einfügepaket (69) zu generieren und zu übermitteln, welches die Einfügedatennutzlast umfasst,
• wenn der Wert der Entscheidungsmetrik einen Grenzwert nicht überschreitet:
∘ ist der Ausgang (46) dafür konfiguriert, um das eingehende optische Paket zu übermitteln.

2. Der optische Knoten nach Anspruch 1, wobei das Einfügemodul ein Speichermittel umfasst.

3. Der optische Knoten (9, 39) nach Anspruch 2, wobei die Entscheidungsmetrik ein Belegungsstand des Speichermittels ist.

4. Der optische Knoten (9, 39) nach Anspruch 3, wobei der Belagungsstand im Zusammenhang mit in einer Warteschlange stehenden Nutzdaten (70, 72) steht, die vorübergehend in dem Speichermittel (71) gespeichert sind, wobei die in der Warteschlange stehenden Nutzdaten Datenrahmen (73, 74, 75, 21) assemblieren, wobei die in der Warteschlange stehenden Nutzdaten dazu bestimmt sind, optische Einfügepakete (69) zu generieren, die an das optische Paketvermittlungsnetzwerk zu übermitteln (1, 48) sind.

5. Der optische Knoten nach Anspruch 4, wobei der Belegungsstand eine Funktion der Anzahl der in der Warteschlange stehenden Nutzdaten (70, 72) ist.

6. Der optische Knoten nach Anspruch 5, wobei der Grenzwert zwei in der Warteschlange stehenden Nutzdaten entspricht.

7. Der optische Knoten nach Anspruch 5, wobei der optische Knoten weiterhin konfiguriert ist für das Übermitteln der Einfügedatennutzlast (70) durch das Assemblieren des zweiten Datenrahmens (17) und des dritten Datenrahmens (21) vor dem Übermitteln der in der Warteschlange stehenden Nutzdaten.

8. Der optische Knoten nach einem jeglichen der Ansprüche 2 bis 7, wobei das Einfügemodul (41) weiterhin ein zweites Speichermittel (62) umfasst und der dritte Datenrahmen (21) vorübergehend in dem zweiten Speichermittel (62) gespeichert wird, wobei das zweite Speichermittel vorübergehend Datenrahmen speichert, die in Nutzdaten zu assemblieren sind.

9. Der optische Knoten nach einem jeglichen der Ansprüche 2 bis 8, wobei das erste (71) und/oder das zweite Speichermittel (62) ein Puffer sind.

10. Der optische Knoten nach Anspruch 1, wobei die Entscheidungsmetrik eine Belegungsstandrate der Nutzdaten ist, die in dem eingehenden optischen Paket enthalten sind, wobei die Belegungrate der Nutzdaten das Verhältnis zwischen der Last der in die Nutzdaten eingekapselten Datenrahmen und der Kapazität der Nutzdaten ist.

11. Der optische Knoten nach einem jeglichen der Ansprüche 1 bis 10, wobei der optische Knoten (39) weiterhin konfiguriert ist für das transparente Übermitteln der eingehenden optischen Pakete, wenn die Entscheidungsmetrik nicht den Grenzwert überschreitet.

12. Der optische Knoten nach einem jeglichen der Ansprüche 1 bis 11, wobei der optische Knoten weiterhin konfiguriert ist für das Übermitteln der eingehenden optischen Pakete (49) per optisch-elektrisch-optischer Wandlung der Nutzdaten (56), den ersten Datenrahmen und den zweiten Datenrahmen assemblierend, wenn die Entscheidungsmetrik nicht den Grenzwert überschreitet.

13. Der optische Knoten nach einem jeglichen der Ansprüche 1 bis 12, wobei das eingehende optische Paket (49) weiterhin eine Kontrolldatenangabe (λc) umfasst, wobei die Nutzdaten (59) auf einem ersten Wellenlängenkanal (λ1) und die Kontrolldaten auf einem zweiten Wellenlängenkanal transportiert werden, wobei die Nutzdaten und die Kontrolldaten multiplext werden, wobei die Kontrolldaten Informationen über den Bestimmungsort des ersten Datenrahmens (58) und den Bestimmungsort des zweiten Datenrahmens (59) enthalten.

14. Der optische Knoten nach einem jeglichen der Ansprüche 1 bis 13, wobei der Eingang (44) einen optischen Empfänger (42) umfasst, der konfiguriert ist für das Demodulieren des eingehenden optischen Pakets in die Nutzdaten, und wobei der Ausgang (46) einen optischen Sender (66) umfasst, der konfiguriert ist für das Modulieren der Einfügungsdatennutzlast zwecks Generierens des optischen Einfügepakets.

15. Verfahren zum Übermitteln von Datenrahmen in einem optischen Paketvermittlungsnetzwerk, umfassend:
• den Empfang eines eingehenden optischen Pakets, wobei das eingehende optische Paket Nutzdaten umfasst, die einen ersten Datenrahmen und einen zweiten Datenrahmen assemblieren, wobei der erste Datenrahmen zum Empfangen und der zweite Datenrahmen zum übermitteln bestimmt ist,
• das Bestimmen eines Belegungsstands eines in einem Einfügemodul enthaltenen Speichermittels,
• wenn der Wert der Belegung einen Grenzwert überschreitet:
∘ Disassemblieren der Nutzdaten zwecks Erhalts des ersten und des zweiten Datenrahmens, dann
∘ Auswählen eines dritten Datenrahmens, der vorübergehend im Einfügemodul gespeichert wird,
∘ Generieren einer Einfügungsdatennutzlast durch das Assemblieren des zweiten mit dem dritten Datenrahmen,
∘ Generieren eines optischen Einfügepakets, welches die Einfügungsdatennutzlast umfasst, und
∘ Übermitteln des die Nutzdaten enthaltenden, optischen Einfügepakets,
• wenn der Wert der Belegung den Grenzwert nicht überschreitet:
∘ Übermitteln des eingehenden optischen Pakets.

## Revendications

1. Noeud optique (9, 39) destiné à transmettre des trames de données dans un réseau à commutation de paquets optiques (1, 48), comprenant :
a. une entrée (44) configurée pour recevoir un paquet optique entrant (10, 49), dans laquelle le paquet optique entrant contient une charge utile (56, 19) comprenant l'assemblage d'une première trame de données (20) et d'une deuxième trame de données (17), la première trame de données (20) étant destinée à être reçue et la deuxième trame de données (17) étant destinée à être transmise,
b. un module d'insertion (41),
c. un module de décision (53) qui est configuré pour déterminer la valeur d'une métrique de décision,
d. un module de désassemblage (57) destiné à désassembler les charges utiles en trames de données,
e. un module d'assemblage (77) destiné à assembler les trames de données en charges utiles,
f. une sortie (46) destinée à transmettre des paquets optiques (69),
• si la valeur de la métrique de décision dépasse un seuil :
∘ le module de désassemblage (57) est configuré pour désassembler la charge utile afin d'obtenir la première (20) et la deuxième (17) trames de données, puis
∘ le module de décision (53) est configuré pour sélectionner une troisième trame de données (21) qui est stockée temporairement dans le module d'insertion (41),
∘ le module d'assemblage est configuré pour générer une charge utile d'insertion (23) contenant l'assemblage de la deuxième trame de données (17) et de la troisième trame de données (21), et
∘ la sortie (46) est configurée pour générer et transmettre un paquet optique d'insertion (69) contenant la charge utile d'insertion,
• si la valeur de la métrique de décision ne dépasse pas le seuil :
∘ la sortie (46) est configurée pour transmettre le paquet optique entrant.

2. Noeud optique selon la revendication 1, dans lequel le module d'insertion comprend un moyen de stockage.

3. Noeud optique (9, 39) selon la revendication 2, dans lequel la métrique de décision est un niveau de remplissage du moyen de stockage.

4. Noeud optique (9, 39) selon la revendication 3, dans lequel le niveau de remplissage est lié à des charges utiles (70, 72) en file d'attente stockées temporairement dans le moyen de stockage (71), dans lequel les charges utiles en file d'attente contiennent des assemblages de trames de données (73, 74, 75, 21), dans lequel les charges utiles en file d'attente sont destinées à générer des paquets optiques d'insertion (69) à transmettre vers le réseau à commutation de paquets optiques (1, 48).

5. Noeud optique selon la revendication 4, dans lequel le niveau de remplissage est une fonction du nombre de charges utiles en file d'attente (70, 72).

6. Noeud optique selon la revendication 5, dans lequel le seuil est égal à deux charges utiles en file d'attente.

7. Noeud optique selon la revendication 5, dans lequel le noeud optique est en outre configuré pour transmettre la charge utile d'insertion (70) contenant l'assemblage de la deuxième trame de données (17) et de la troisième trame de données (21) avant de transmettre les charges utiles en file d'attente.

8. Noeud optique selon l'une quelconque des revendications 2 à 7, dans lequel le module d'insertion (41) comprend en outre un deuxième moyen de stockage (62) et la troisième trame de données (21) est stockée temporairement dans le deuxième moyen de stockage (62), dans lequel le deuxième moyen de stockage stocke temporairement des trames de données destinées à être assemblées en charges utiles.

9. Noeud optique selon l'une quelconque des revendications 2 à 8, dans lequel le premier (71) et/ou le deuxième (62) moyens de stockage sont des mémoires tampons.

10. Noeud optique selon la revendication 1, dans lequel la métrique de décision est un taux de niveau de remplissage de la charge utile contenue dans le paquet optique entrant, dans lequel le taux de remplissage de la charge utile est le rapport entre la charge des trames de données encapsulées dans la charge utile et la capacité totale de la charge utile.

11. Noeud optique selon l'une quelconque des revendications 1 à 10, dans lequel le noeud optique (39) est en outre configuré pour transmettre le paquet optique entrant de façon transparente lorsque la métrique de décision ne dépasse pas le seuil.

12. Noeud optique selon l'une quelconque des revendications 1 à 11, dans lequel le noeud optique est en outre configuré pour transmettre le paquet optique entrant (49) par conversion optique-électrique-optique de la charge utile (56) contenant l'assemblage de la première trame de données et de la deuxième trame de données lorsque la métrique de décision ne dépasse pas le seuil.

13. Noeud optique selon l'une quelconque des revendications 1 à 12, dans lequel le paquet optique entrant (49) contient en outre des données de contrôle (Ac), dans lequel la charge utile (59) est transportée par un premier canal de longueur d'onde (À 1) et les données de contrôle sont transportées par un deuxième canal de longueur d'onde, dans lequel la charge utile et les données de contrôle sont multiplexées, dans lequel les données de contrôle contiennent des informations sur la destination de la première trame de données (58) et la destination de la deuxième trame de données (59).

14. Noeud optique selon l'une quelconque des revendications 1 à 13, dans lequel l'entrée (44) comprend un récepteur optique (42) configuré pour démoduler le paquet optique entrant en charge utile et la sortie (46) comprend un émetteur optique (66) configuré pour moduler la charge utile d'insertion afin de générer le paquet optique d'insertion.

15. Procédé de transmission de trames de données dans un réseau à commutation de paquets optiques comprenant les étapes suivantes :
• recevoir un paquet optique entrant, le paquet optique entrant contenant une charge utile comprenant l'assemblage d'une première trame de données et d'une deuxième trame de données, la première trame de données étant destinée à être reçue et la deuxième trame de données étant destinées à être transmise,
• déterminer le niveau de remplissage d'un moyen de stockage contenu dans un module d'insertion,
• si le niveau de remplissage dépasse un seuil :
∘ désassembler la charge utile pour obtenir la première et la deuxième trames de données, puis
∘ sélectionner une troisième trame de données qui est stockée temporairement dans le module d'insertion,
∘ générer une charge utile d'insertion contenant l'assemblage de la deuxième trame de données et de la troisième trame de données,
∘ générer un paquet optique d'insertion contenant la charge utile d'insertion, et
∘ transmettre le paquet optique d'insertion contenant les charges utiles,
• si le niveau de remplissage ne dépasse pas le seuil :
∘ transmettre le paquet optique entrant.
